# EUROPÄISCHE PATENTSCHRIFT

(11) **EP 4 487 015 B1**
(45) Veröffentlichungstag und Bekanntmachung des Hinweises auf die Patenterteilung: **04.03.2026**
(21) Anmeldenummer: 23701017.8
(22) Anmeldetag: 16.01.2023
(51) Int. Cl.: F16B 2/24, F16B 37/04

(54) **FEDERBÜGEL ZUR VERDREHSICHEREN AUFNAHME EINER GEWINDEMUTTER SOWIE GEWINDEMUTTERANORDNUNG UND SPANNSCHELLE AUFWEISEND EINEN DERARTIGEN FEDERBÜGEL**
SPRING CLIP FOR RECEIVING A THREADED NUT IN A TORSION-PROOF MANNER, AND THREADED NUT ASSEMBLY AND TENSIONING CLAMP COMPRISING SUCH A SPRING CLIP
PINCE À RESSORT DESTINÉE À RECEVOIR UN ÉCROU FILETÉ D'UNE MANIÈRE RÉSISTANT À LA TORSION ET ENSEMBLE ÉCROU FILETÉ ET PINCE DE MISE EN TENSION COMPRENANT UNE TELLE PINCE À RESSORT

(30) Priorität: 04.03.2022 DE 202022101207 U
(43) Veröffentlichungstag der Anmeldung: 08.01.2025
(73) Patentinhaber: NORMA Germany GmbH, 63477 Maintal (DE)
(72) Erfinder: GHIRARDI, Fabio, 63450 Hanau (DE); HENRICH, Detlef, 63694 Limeshain (DE); ALI, Ahmed, Newbury, RG141EY (GB)
(74) Vertreter: Kusche, Robert
(86) Internationale Anmeldenummer: PCT/EP2023/050888
(87) Internationale Veröffentlichungsnummer: WO 2023/165753

(56) Entgegenhaltungen:
- CN-A- 111 576 699
- CN-U- 214 304 789
- JP-U- S5 013 876
- US-A- 3 035 624
- US-B2- 8 978 212

## Beschreibung

Die Erfindung betrifft einen Federbügel zur verdrehsicheren Aufnahme einer mehreckigen Gewindemutter gemäß dem Oberbegriff von Anspruch 1. Die Erfindung betrifft außerdem eine Gewindemutteranordnung umfassend einen derartigen Federbügel. Darüber hinaus betrifft die Erfindung eine Spannschelle mit einer Gewindemutteranordnung umfassend einen derartigen Federbügel.

Im Sinne dieser Anmeldung werden die Begriffe "Käfigmutteranordnung" und "Gewindemutteranordnung" synonym verwendet, solange sich aus dem jeweiligen Kontext nichts anderes ergibt. Unter den Begriffen ist im Wesentlichen eine Anordnung zu verstehen, die einen Käfig oder einen Federbügel sowie eine darin aufgenommene Gewindemutter umfasst. Entsprechend werden auch die Begriffe "Käfigmutter" und "Gewindemutter" synonym verwendet, solange sich aus dem jeweiligen Kontext nichts anderes ergibt.

In Federbügeln angeordnete Gewindemuttern werden unter anderem zum Verspannen von Spannschellen verwendet. Dabei ist vorgesehen, dass die Gewindemutter zusammen mit einer Spannschraube jeweils an einem Spannkopf der Schelle vorgelagert wird. Der Federbügel bzw. der Käfig dient dabei insbesondere der Anordnung der Gewindemutter an dem Spannkopf, um so den Spannmechanismus zu erleichtern.

Aus der DE 10 2011 009 536 A1 ist dazu beispielsweise ein Federbügel zur verdrehsicheren Aufnahme einer Gewindemutter bekannt. Die dort beschriebene Ausführung ist jedoch nachteilig, weil die Gewindemutter schon während der Formung des Federbügels in selbigem angeordnet werden. Ein nachträgliches Einführen der Mutter in den Federbügel, d.h. nachdem Federbügel zu einem Käfig geformt worden ist, ist nicht oder nur unter Einsatz weiterer Werkzeuge möglich. Ein weiterer Nachteil, der sich aus der vorbekannten Lösung ergibt, besteht darin, dass jeder Federbügeltyp stets nur mit einem bestimmten Spannkopftyp zusammenwirken kann, weil die Rastnuten des Federbügels ohne den Einsatz von weiterem Werkzeug nicht an unterschiedlich dicke Schellenbändern angepasst werden können.

Ein weiterer Federbügel ist aus JP S50 13876 U bekannt.

Der Erfindung liegt die Aufgabe zugrunde, einen Federbügel zur Aufnahme einer mehreckigen Gewindemutter bereitzustellen, welcher die Nachteile im Stand der Technik beseitigt und welcher insbesondere die Montage der Gewindemutteranordnung erleichtert und welcher außerdem die Anbringung der Gewindemutteranordnung an dem dazu vorgesehenen Spannkopf vereinfacht.

### Allgemeine Beschreibung

Hauptmerkmale der Erfindung sind in Anspruch 1 angegeben. Ausgestaltungen sind Gegenstand der Ansprüche 2 bis 8. Weitere Aspekte der Erfindung werden durch die nebengeordneten Ansprüche 9 und 10 eingeführt.

Zur Lösung der Aufgabe ist erfindungsgemäß ein Federbügel zur verdrehsicheren Aufnahme einer mehreckigen Gewindemutter vorgesehen, wobei der Federbügel im Wesentlichen U-förmig ausgebildet ist und einen Boden und zwei Schenkel aufweist, wobei jeder Schenkel mindestens eine Stufe und ein freies Ende aufweist, wobei zwischen der Stufe und dem freien Ende je eines Schenkels ein Rastabschnitt ausgebildet ist, wobei die freien Enden der Schenkel jeweils voneinander weggebogen sind, und die gebogenen freien Enden relativ zum Rastabschnitt einen Außenwinkel von mehr als 100° und insbesondere mehr als 120° aufweisen. Der Federbügel ist dadurch gekennzeichnet, dass die Rastabschnitte der Schenkel derart gegenüber einer senkrecht zum Boden verlaufenden Mittelachse geneigt ausgebildet sind, dass sich ein zwischen den Rastabschnitten ausgebildeter Durchgang in Richtung des Bodens verjüngt.

Mit einem derart ausgestalteten Federbügel ist es auf einfache Art und Weise möglich, den Federbügel und somit die Gewindemutteranordnung in eine entsprechende Öffnung im Spannkopf einer Spannschelle einzuführen und mit der Spannschelle zu verrasten. Dabei sorgen insbesondere die im Wesentlichen zu einer Spitze gebogenen freien Enden dafür, dass sich die Schenkel der Federbügel durch leichte Kraftausübung beim Einführen des Federbügels in die Öffnung zueinander biegen. Mit anderen Worten: Bei Einführung des Federbügels in die Öffnung des Spannkopfs werden die freien Enden der Schenkel nach innen in Richtung der Rastabschnitte gedrückt - die Außenwinkel α, α' der freie Enden können also größer bzw. die Innenwinkel δ, δ' der freien Enden können kleiner werden. Es ist allerdings auch möglich, dass die zu Spitzen gebogenen freien Enden die nach innen (also in Richtung Durchgang) wirkende Kraft auf die Schenkel übertragen, welche dadurch anstelle der freien Ende nach innen gebogen werden. In diesem Fall bleiben die Außenwinkel α, α' bzw. die Innenwinkel δ, δ' der freien Enden im Wesentlichen konstant. Dadurch wird die maximale Breite des Federbügels verringert, was zur Folge hat, dass der Federbügel durch eine entsprechende Öffnung im Spannkopf geschoben werden kann. Sobald die freien Enden der Schenkel die Öffnung passiert haben, schnellen die Schenkel wieder in ihren Ausgangszustand zurück. Die freien Enden verhindern nun ein Herausrutschen des Federbügels und dienen somit als Verliersicherung.

Die Schenkel dienen also zum einen dazu den Federbügel bei bestimmungsgemäßem Gebrauch des Federbügels durch die entsprechende Öffnung des Spannkopfes zu führen. Zum anderen dienen sie mit ihren im Wesentlichen senkrecht zum Boden ausgestalteten Abschnitten als Verdrehsicherung der mehreckigen Gewindemutter. Einmal im Federbügel und zwischen den Schenkeln angeordnet, kann sich die mehreckige Gewindemutter nicht mehr um ihre eigene Mittelachse drehen. Dadurch können hohe Drehmomente aufgenommen werden.

Durch die nach außen, also voneinander weggebogenen freien Enden der Schenkel, ist es außerdem möglich, die Gewindemutter in den bereits geformten Federbügel einzuführen. Wären sie nach Innen (also in Richtung Mittelachse) gebogen, wäre ein derartiges Einführen nicht möglich. Somit kann die Herstellung der Gewindemutteranordnung signifikant erleichtert werden, weil der Schritt des Formens des Federbügels nicht mehr vom Vorliegen einer Gewindemutter abhängt. Stattdessen können die Gewindemuttern im Anschluss an die Herstellung der Federbügel durch einen Durchgang in die dazu vorgesehene Aufnahme eingeführt werden. Auf diese Weise können die erfindungsgemäßen Federbügel deutlich schneller als bisher hergestellt werden.

Die erfindungsgemäße Neigung oder Schräge der Schenkel bzw. speziell der Rastabschnitte trägt zusätzlich dazu bei, dass die Gewindemuttern nach Herstellung des Federbügels auf einfache Art und Weise in die Aufnahme des Federbügels eingeführt werden können. Schließich bewirkt eine solche Ausgestaltung der Schenkel, dass der zwischen den Schenkeln gebildete Durchgang zumindest abschnittsweise trichterförmig in Richtung des Bodens des Federbügels verläuft. Hierdurch wird die Führung der Gewindemutter erleichtert.

Vorteilhafterweise kann auch vorgesehen sein, dass die Schenkel jeweils einen ersten Knick, einen zweiten Knick und einen dritten Knick umfassen. Der erste Knick und der zweite Knick bilden dabei die Stufe je eines der Schenkel und der dritte Knick ist am Übergang vom Rastabschnitt zum freien Ende je eines der Schenkel ausgebildet. Hierdurch wird die Federung der Schenkel gegenüber Schenkeln ohne Knick erhöht. Außerdem erhöhen die Knicke die Stabilität der Schenkel.

Eine vorteilhafte Ausgestaltung sieht vor, dass ein Abstand B zwischen den zweiten Knicken der Schenkel kleiner ist als ein Abstand C zwischen den dritten Knicken der Schenkel. Diese Ausführung hat zur Folge, dass der Durchgang des Federbügels nach unten hin, also in Richtung des ersten Knicks der Schenkel, trichterförmig zuläuft. Hierdurch wird das Einführen der Gewindemutter in den Federbügel zusätzlich erleichtert. Gleichzeitig wird auch das Einführen des Federbügels in die Öffnung des Spannkopfes erleichtert.

Gemäß einer Weiterentwicklung können die freien Enden derart voneinander weggebogen sein, dass sie im Bereich des dritten Knicks und relativ zum Rastabschnitt um einen Außenwinkel von mehr als 90°, vorzugsweise von mehr als 100° und insbesondere von mehr als 120° gebogen, gekickt oder gefaltet sind. Somit sind die Schenkel im Bereich der freien als Pfeilspitzen ausgebildet. Diese Ausgestaltung hat zur Folge, dass die Schenkel auf einfache Art und Weise in die entsprechende Öffnung der Spannschelle eingeführt werden können. Hierdurch kann außerdem die maximale Breite des gesamten Federbügels gering gehalten werden. Als Folge lässt sich der Federbügel mit geringem Kraftaufwand in die entsprechende Öffnung des Spannkopfes führen. Ein weiterer Vorteil, der sich aus spitz nach außen gebogenen freien Enden ergibt, besteht darin, dass hierdurch die Kraft der freien Enden auf die Randfläche der Öffnung des Spannkopfs erhöht ist, weil die freien Enden durch ihre nach unten (also in Richtung Boden bzw. in Richtung der Randfläche der Spannkopföffnung) gerichtete Vorspannung eine Federkraft auf die Randfläche ausüben. Als Folge kann der Federbügel mit hoher Zuverlässigkeit am Spannkopf gelagert bzw. verrastet werden.

Vorteilhafterweise kann außerdem vorgesehen sein, dass die Schenkel jeweils im Bereich des Rastabschnitts eine Rastnut umfassen, welche dazu ausgestaltet ist, mit einer Öffnung eines Spannelements zusammenzuwirken. Die Rastnut kann dabei mit dem inneren Rand der Öffnung des Spannelements zusammenwirken, sodass der Federbügel und damit die Gewindemutter verliersicher am Spannelement gehalten werden kann. Dabei kann die Rastnut eine derartige Erstreckung aufweisen, dass der Federbügel schwenkbar mit dem Spannelement verrastbar ist. Vorteilhaft ist dabei, dass die Rastnut durch die spitz nach außen und nach unten gebogenen freien Enden eine variable Rasthöhe E aufweist. Die Rasthöhe E ist dabei als der Abstand zwischen dem freien Ende und dem ersten Knick je eines Schenkels zu verstehen. Die freien Ende besitzen durch ihre geknickte Ausgestaltung eine Federkraft. Hierdurch wird ermöglicht, dass die Rastnut Spannköpfe mit unterschiedlichen Materialstärken zuverlässig greifen kann. So kann ein Federbügel mit einer derartigen Rastnut beispielsweise mit Spannschellen verwendet werden, deren Schellenband eine Dicke von 1 mm bis 3 mm, vorzugsweise von 1,5 mm bis 2 mm, aufweist. Eine solche Ausgestaltung der Rasthöhe hat eine erhöhte Bewegungsfreiheit und sowie eine zusätzlich eine gewisse Bewegungsfreiheit und Flexibilität bei der Montage und beim Einführen der Schraube verbesserte Flexibilität bei der Montage und beim Einführen der Schraube zur Folge. Vorteilhafterweise sollte die Rasthöhe E im Verhältnis zur Blechdicke (Materialstärke) möglichst gering gehalten werden, um so einem Herausfallen des Federbügels aus der Öffnung entgegenzuwirken.

Bevorzugt ist vorgesehen, dass der Federbügel mindestens eine, insbesondere mindestens zwei Haltelaschen zur Verdrehsicherung der Gewindemutter umfasst. Gemäß einer Weiterentwicklung ist denkbar, dass die Haltelaschen jeweils an einer Seite des Bodens angeordnet sind, an der kein Schenkel angeordnet ist. Darüber hinaus sollten sich die Haltelaschen insbesondere senkrecht vom Boden erstrecken, sodass sie mit den Schenkeln eine zumindest teilweise geschlossene Aufnahme für die Gewindemutter ausbilden. Eine derartige Ausgestaltung hat den Vorteil, dass die Gewindemutter in einer Richtung, die senkrecht oder quer zur Einfuhrrichtung des Federbügels bzw. zur Einschraubrichtung der Spannschraube verläuft, nicht vom Federbügel getrennt werden kann. Vielmehr ist die Gewindemutter in den Federbügel eingeformt oder eingekammert und wird somit unverlierbar in der Aufnahme des Federbügels gehalten. Ferner können die Haltelaschen zusätzlich zu den Schenkeln ein möglicherweise auftretendes Drehmoment aufnehmen, das beim Einschrauben der Spannschraube in die Gewindemutter entstehen kann. Sie dienen also ebenfalls als Verdrehsicherung der Gewindemutter.

Es kann außerdem vorgesehen sein, dass der Federbügel umfassend Boden, Schenkel und Haltelaschen einstückig ausgebildet ist. Dabei können verschiedenste Materialien eingesetzt werden. Der Federbügel kann beispielsweise aus einem Metall hergestellt werden. Denkbar ist jedoch auch eine Ausgestaltung, die ein Material aus Kunststoff umfasst. Es außerdem möglich, dass der Federbügel aus einem anderen Material hergestellt ist als das Spannelement und/oder die Gewindemutter. Denkbar ist auch eine Materialkombination aus zwei oder mehreren Blecharten (bspw. ein Bitmetall). Es ist auch möglich, Bleche mit verschiedenen Dicken vorzusehen.

Die Rastverbindung zwischen Federbügel und Spannelement lässt nahezu beliebige Materialkombinationen zu.

Vorteilhafterweise sind die Kanten des Federbügels als offene Kanten ausgebildet. Mit anderen Worten: Die Haltelaschen sind - außer über den Boden - nicht mit den Schenkeln verbunden. Stattdessen ist die Aufnahme des Federbügels im Bereich seiner Kanten geöffnet, sodass die Ecken der Gewindemutter dort aus der Aufnahme des Federbügels herausragen. Dadurch kann der Federbügel mit relativ hohen Toleranzen gefertigt werden, was eine einfache Herstellung mittels Biegeprozess ermöglicht.

Gemäß einer Weiterentwicklung kann vorgesehen sein, dass der erste Knick einen ersten Innenwinkel β, β' aufspannt, dass der zweite Knick einen zweiten Innenwinkel γ, γ' aufspannt und dass der dritte Knick einen dritten Innenwinkel δ, δ' aufspannt Der erste Innenwinkel β, β' und der zweite Innenwinkel γ, γ' können jeweils stumpf (also 90° oder größer) oder spitz (also kleiner als 90°) sein. Der dritte Innenwinkel δ, δ' ist bevorzugt jeweils kleiner als 90°, insbesondere kleiner ist als 60°.

Ein weiterer Aspekt der Erfindung betrifft eine Gewindemutteranordnung zum Verspannen eine Spannschelle, umfassend einen Federbügel gemäß einer der vorstehenden Ausführungen sowie eine Gewindemutter, die mit einer Spannschraube zusammenwirkt, wobei die Gewindemutter bei bestimmungsgemäßem Gebrauch verdrehsicher in dem Federbügel anordenbar ist.

Ein weiterer Aspekt der Erfindung betrifft eine Spannschelle mit einer Spannschraube, die mit einer mehreckigen Gewindemutter zusammenwirkt, wobei die Spannschelle eine Gewindemutteranordnung gemäß einer der vorstehenden Ausführungen umfasst.

### Spezielle Beschreibung

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Federbügel gemäß einer bevorzugten Ausführungsform in einer ersten schematischen Seitenansicht;
- Fig. 2: den Federbügel gemäß Fig. 1 in einer zweiten schematischen Seitenansicht;
- Fig. 3: eine Gewindemutteranordnung umfassend den Federbügel gemäß Fig. 1 und eine Gewindemutter in einer ersten schematischen Seitenansicht;
- Fig. 4: die Gewindemutteranordnung gemäß Fig. 3 in einer zweiten schematischen Seitenansicht.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechende Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

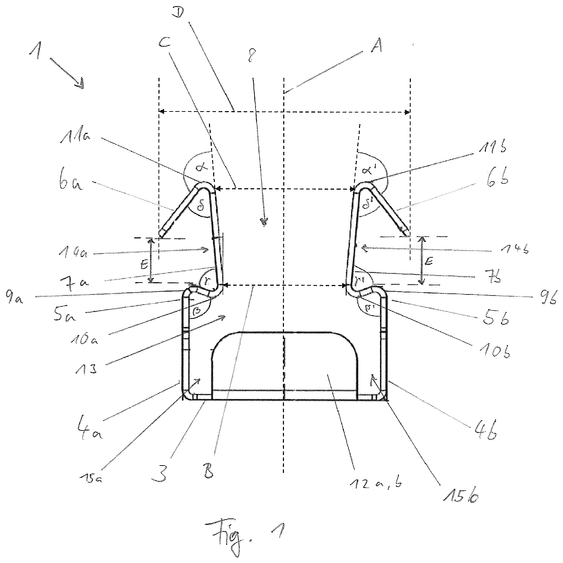

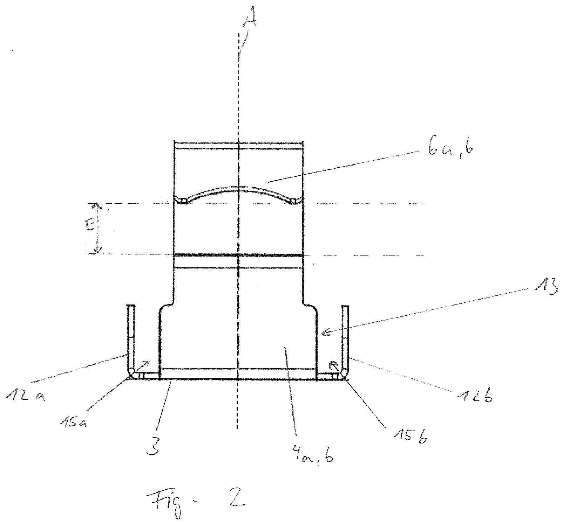

In Fig. 1 ist in einer ersten schematischen Seitenansicht ein Federbügel 1 zur verdrehsicheren Aufnahme einer mehreckigen Gewindemutter gemäß einer bevorzugten Ausführungsform gezeigt. Fig. 2 zeigt den Federbügel 1 aus Fig. 1 in einer zweiten schematischen Seitenansicht. Die Beschreibung der in Fig. 1 gezeigten Ausführungsform trifft daher auch auf die Ausführungsform der Fig. 2 zu.

In der für Fig. 1 gewählten Seitenansicht ist die U-förmige Ausgestaltung des Federbügels 1 zu erkennen. Der beispielhaft gezeigte Federbügel 1 weist einen Boden 3 und zwei Schenkel 4a,b auf. Dabei umfasst jeder Schenkel 4a,b eine nach innen - also zur vertikalen Mittelachse A des Federbügels hin - gerichtete Stufe 5a,b sowie ein nach außen - also von der vertikalen Mittelachse A des Federbügels weg - gerichtetes freies Ende 6a,b auf. Der Abschnitt des Schenkels 4a,b zwischen der Stufe 5a,b und dem freien Ende 6a,b je eines Schenkels 4a,b ist als Rastabschnitt 7a,b ausgebildet.

Wie in Fig. 1 gezeigt ist, sind die freien Enden 6a,b des Federbügels 1 derart voneinander weggebogen, das sie eine Spitze ausbilden. Sie weisen also relativ zum Rastabschnitt 7a,b des jeweiligen Schenkels 4a,b einen Außenwinkel α, α' von ca. 135° auf. Entsprechend sind die freien Enden 6a,b derart geknickt, dass sie jeweils einen Innenwinkel δ, δ' von ca. 45° aufspannen. Dabei ist vorgesehen, dass die Außenwinkel α, α' und die Innenwinkel δ, δ' der freien Enden 6a,b jeweils zu 180° komplementär sind, d.h. der Außenwinkel α und der Innenwinkel δ ergeben zusammen 180° und der Außenwinkel α' und der Innenwinkel δ' ergeben zusammen ebenfalls 180°. Mit einer derartigen Ausgestaltung ist es auf einfache Art und Weise möglich, den Federbügel 1 und somit die Gewindemutteranordnung in eine entsprechende Öffnung im Spannkopf einer Spannschelle einzuführen und zu verrasten. Schließlich kann die maximale Breite C des Federbügels 1 durch die spitz nach außen gebogenen freien Enden 6a,b relativ gering gehalten werden. Bei der Einführung des Federbügels 1 in die Öffnung werden die freien Enden 6a,b nach innen in Richtung der Rastabschnitte 7a,b gedrückt - die Außenwinkel α, α' werden also größer bzw. die Innenwinkel δ, δ' werden kleiner. Gleichzeitig werden die Schenkel 4a,b bei Einführung des Federbügels 1 leicht zueinander bewegt. Sobald die freien Enden 6a,b die Öffnung des Spannkopfs passiert haben, schnellen die Schenkel 4a,b wieder in ihren Ausgangszustand zurück. Die freien Enden verhindern nun ein Herausrutschen des Federbügels.

Gemäß dem in Fig. 1 gezeigten Beispiel sind die Rastabschnitte 7a,b der Schenkel 4a,b jeweils gegenüber einer senkrecht zum Boden 3 verlaufenden Mittelachse A geneigt ausgebildet. Dabei sind die Rastabschnitte 7a,b insbesondere derart gegenüber der Mittelachse A geneigt, dass sich ein zwischen den Rastabschnitten 7a,b ausgebildeter Durchgang 8 in Richtung des Bodens 3 verjüngt. Die Neigung oder Schräge der Rastabschnitte 7a,b trägt dazu bei, dass die Gewindemuttern 2 nach Herstellung des Federbügels 1 auf einfache Art und Weise in die Aufnahme 13 des Federbügels 1 eingeführt werden können.

Wie in Fig. 1 gezeigt, umfassen die Schenkel 4a,b bevorzugt jeweils einen ersten Knick 9a,b, einen zweiten Knick 10a,b und einen dritten Knick 11a,b. Dabei bilden der erste Knick 9a,b und der zweite Knick 10a,b die nach innen gerichtete Stufe 5a,b des Schenkel 4a,b aus. Der dritte Knick 11a,b ist am Übergang vom Rastabschnitt 7a,b zum freien Ende 6a,b je eines der Schenkel 4a,b ausgebildet. Durch die Knicke 9a,b, 11a,b, 12a,b wird die Schwenkbarkeit der Schenkel 4a,b gegenüber Schenkeln ohne Knick erhöht. Dabei ist vorgesehen, dass zwischen den zweiten Knicken 10a,b der beiden Schenkel 4a,b ein Abstand B vorliegt, der kleiner ist als ein Abstand C zwischen den dritten Knicken 11a,b der beiden Schenkel 4a,b. Diese Ausgestaltung ergibt sich aus der Trichterform des Durchgangs 8 des Federbügels 1. Hierdurch wird die Führung der Gewindemutter 2 in den Federbügel 1 zusätzlich erleichtert.

Gemäß dem in Fig. 1 gezeigten Beispiel sind der erste Knick 9a,b, der zweite Knick 10a,b und der dritte Knick 11a,b jeweils spitz ausgestaltet, d.h. sie umfassen je Innenwinkel, die kleiner als 90° sind. Dabei spannt der erste Knick 9a,b einen Innenwinkel β, β' auf, der zweite Knick 10a,b spannt einen zweiten Innenwinkel γ, γ' auf und der dritte Knick 11a,b spannt einen dritten Innenwinkel δ, δ' auf.

Die in Fig. 1 gezeigte Ausführung umfasst jeweils im Bereich der Rastabschnitte 7a,b eine Rastnut 14a,b, welche dazu ausgestaltet ist, mit der Öffnung des Spannelements zusammenzuwirken. Die Rastnut 14a,b soll dabei mit dem inneren Rand der Öffnung zusammenwirken, sodass der Federbügel 1 und damit die Gewindemutter 2 verliersicher am Spannelement gehalten werden können. Dabei kann die Rastnut 14a,b eine derartige Erstreckung aufweisen, dass der Federbügel 1 schwenkbar mit dem Spannelement verrastbar ist. Vorteilhaft ist dabei, dass die Rastnut 14a,b durch die nach außen und nach unten gebogenen pfeilförmigen freien Enden 6a,b eine variable Rasthöhe E aufweist. Die Rasthöhe E ist dabei als der Abstand zwischen dem freien Ende 6a,b und dem ersten Knick 9a,b je eines Schenkels 4a,b zu verstehen. Die freien Enden 6a,b besitzen durch diese besondere Ausgestaltung eine Federkraft, wodurch ermöglicht wird, dass die Rastnut 14a,b Spannköpfe mit unterschiedlichen Materialstärken zuverlässig greifen kann.

In Fig. 1 und Fig. 2 ist außerdem zu sehen, dass der Federbügel 1 mindestens zwei Haltelaschen 12a,b zur Verdrehsicherung der Gewindemutter 2 umfassen kann. Dabei ist je eine der Haltelaschen 12a,b an je einer Seite des Bodens 3 angeordnet, an der kein Schenkel 4a,b angeordnet ist. Wie in Fig. 2 dargestellt, erstrecken sich die Haltelaschen 12a,b bevorzugterweise derart senkrecht vom Boden 3, dass sie mit den Schenkeln 4a,b eine zumindest teilweise geschlossene Aufnahme 13 für die Gewindemutter 2 ausbilden. Eine derartige Ausgestaltung hat den Vorteil, dass die Gewindemutter 2 verliersicher im Federbügel 1 gehalten werden kann. Darüber hinaus können die Haltelaschen 12a,b zusätzlich zu den Schenkeln 4a,b ein Drehmoment aufnehmen, das beim Einschrauben der Spannschraube in die Gewindemutter 2 auftreten kann.

Wie in Fig. 1 und 2 außerdem gezeigt ist, sind die Kanten des Federbügels 1 als offene Kanten 15a,b ausgebildet, sodass die Ecken der Gewindemutter 2 aus der Aufnahme 13 des Federbügels 1 herausragen. Dadurch kann der Federbügel 1 mit relativ hohen Toleranzen gefertigt werden, was eine einfache Herstellung mittels Biegeprozess ermöglicht.

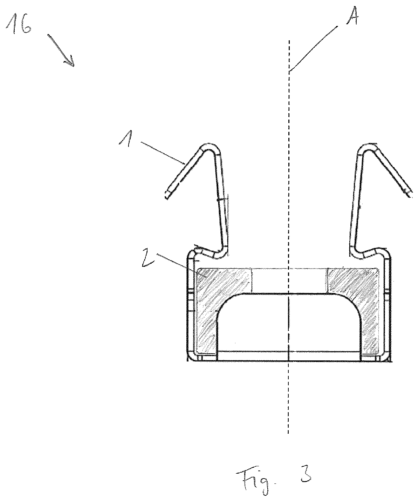

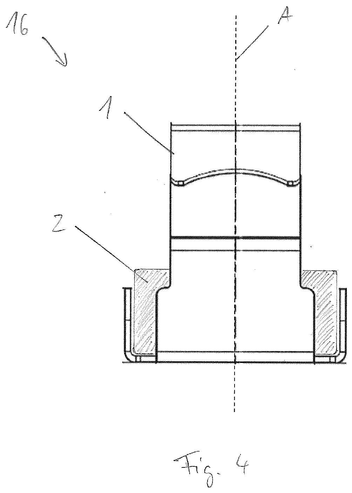

In Fig. 3 und Fig. 4 ist jeweils eine Gewindemutteranordnung 16 gezeigt, welche den Federbügel 1 gemäß Fig. 1 und Fig. 2 sowie eine darin angeordnete mehreckige Gewindemutter 2 umfasst. Die Gewindemutter 2 ist dabei in verliersicher in der Aufnahme 13 des Federbügels 1 eingekammert.

Die Erfindung ist nicht auf eine der vorbeschriebenen Ausführungsformen beschränkt, sondern in vielfältiger Weise innerhalb des durch die Patentansprüche bestimmten Schutzbereichs abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Federbügel
- 2: Gewindemutter
- 3: Boden
- 4a,b: Schenkel
- 5a,b: Stufe
- 6a,b: freies Ende
- 7a,b: Rastabschnitt
- 8: Durchgang
- 9a,b: Erster Knick
- 10a,b: Zweiter Knick
- 11a,b: Dritter Knick
- 12a,b: Haltelasche
- 13: Aufnahme
- 14a,b: Rastnut
- 15a,b: Offene Kanten
- 16: Gewindemutteranordnung

- α, α': Außenwinkel
- β, β': Erster Innenwinkel
- γ, γ': Zweiter Innenwinkel
- δ, δ': Dritter Innenwinkel

- A: Mittelachse
- B: Erster Abstand
- C: Zweiter Abstand
- D: Breite
- E: Rasthöhe

## Patentansprüche

1. Federbügel (1) zur verdrehsicheren Aufnahme einer mehreckigen Gewindemutter (2), wobei der Federbügel (1) im Wesentlichen U-förmig ausgebildet ist und einen Boden (3) und zwei Schenkel (4a,b) aufweist, wobei jeder Schenkel (4a,b) mindestens eine Stufe (5a,b) und ein freies Ende (6a,b) aufweist, wobei zwischen der Stufe (5a,b) und dem freien Ende (6a,b) je eines Schenkels (4a,b) ein Rastabschnitt (7a,b) ausgebildet ist, wobei die freien Enden (6a,b) der Schenkel (4a,b) jeweils voneinander weggebogen sind, und wobei die gebogenen freien Enden (6a,b) relativ zum Rastabschnitt (7a,b) einen Außenwinkel (α, α') von mehr als 100° aufweisen, **dadurch gekennzeichnet, dass** die Rastabschnitte (7a,b) derart gegenüber einer senkrecht zum Boden (3) verlaufenden Mittelachse (A) geneigt ausgebildet sind, dass sich ein zwischen den Rastabschnitten (7a,b) ausgebildeter Durchgang (8) in Richtung des Bodens (3) verjüngt.

2. Federbügel (1) nach einem der vorhergehenden Ansprüche, **dadurch gekennzeichnet, dass** die Schenkel (4a,b) jeweils einen ersten Knick (9a,b), einen zweiten Knick (10a,b) und einen dritten Knick (11a,b) umfassen, wobei der erste Knick (9a,b) und der zweite Knick (10a,b) die Stufe (5a,b) je eines der Schenkel (4a,b) ausbilden und wobei der dritte Knick (11 a,b) am Übergang vom Rastabschnitt (7a,b) zum freien Ende (6a,b) je eines der Schenkel (4a,b) ausgebildet ist.

3. Federbügel (1) nach Anspruch 2, **dadurch gekennzeichnet, dass** ein Abstand (B) zwischen den zweiten Knicken (10a,b) der Schenkel (4a,b) kleiner ist als ein Abstand (C) zwischen den dritten Knicken (11a,b) der Schenkel (4a,b).

4. Federbügel (1) nach einem der vorhergehenden Anspruche, **dadurch gekennzeichnet, dass** der Federbügel (1) mindestens eine, insbesondere mindestens zwei Haltelaschen (12a,b) zur Verdrehsicherung der Gewindemutter (2) umfasst.

5. Federbügel (1) nach Anspruch 4, **dadurch gekennzeichnet, dass** die Haltelaschen (19, 30) an jeweils an einer Seite des Bodens (3) angeordnet ist und sich derart senkrecht vom Boden (3) erstrecken, dass sie mit den Schenkeln (4a,b) eine zumindest teilweise geschlossene Aufnahme (13) für die Gewindemutter (2) ausbilden.

6. Federbügel (1) nach einem der Ansprüche 4 oder 5, **dadurch gekennzeichnet, dass** der Federbügel (1) umfassend Boden (3), Schenkel (4a,b) und Haltelaschen (12a,b) einstückig ausgebildet ist.

7. Federbügel (1) nach einem der vorhergehenden Ansprüche, **dadurch gekennzeichnet, dass** die Schenkel (4a,b) jeweils im Bereich des Rastabschnitts (7a,b) eine Rastnut (14a,b) umfasst, welche dazu ausgestaltet ist, mit einer Öffnung eines Spannelements zusammenzuwirken.

8. Federbügel (1) nach einem der Ansprüche 2 bis 7, **dadurch gekennzeichnet, dass** der erste Knick (9a,b) einen ersten Innenwinkel (β, β') aufspannt, dass der zweite Knick (10a,b) einen zweiten Innenwinkel (γ, γ') aufspannt und dass der dritte Knick (11a,b) einen dritten Innenwinkel (δ, δ') aufspannt, wobei der erste Innenwinkel (β, β'), der zweite Innenwinkel (γ, γ') und der dritte Innenwinkel (δ, δ') jeweils kleiner als 60° sind.

9. Gewindemutteranordnung (15) zum Verspannen eine Spannschelle, umfassend einen Federbügel (1) nach einem der vorstehenden Ansprüche und eine Gewindemutter (2), die mit einer Spannschraube zusammenwirken kann, wobei die Gewindemutter (2) bei bestimmungsgemäßem Gebrauch verdrehsicher in dem Federbügel (3) anordenbar ist.

10. Spannschelle mit einer Spannschraube, die mit einer mehreckigen Gewindemutter (2) zusammenwirkt, wobei die Spannschelle eine Gewindemutteranordnung (15) nach Anspruch 9 umfasst und wobei die Gewindemutter (2) eine Gewindemutter (2) nach Anspruch 9 ist.

## Claims

1. Spring bracket (1) for torsion-proof mounting of a polygonal threaded nut (2), wherein the spring bracket (1) is of substantially U-shaped configuration and has a bottom (3) and two legs (4a, b), wherein each leg (4a, b) has at least one step (5a, b) and a free end (6a, b), wherein a latching portion (7a, b) is formed between the step (5a, b) and the free end (6a, b) of in each case one leg (4a, b), wherein the free ends (6a, b) of the legs (4a, b) are each bent away from one another, and wherein the bent free ends (6a, b) have an exterior angle (α, α') of more than 100° relative to the latching portion (7a, b), **characterized in that** the latching portions (7a, b) are configured inclined with respect to a central axis (A) running perpendicularly with respect to the bottom (3), in such a way that a passage (8) configured between the latching sections (7a, b) tapers in the direction of the bottom (3).

2. Spring bracket (1) according to either of the preceding claims, **characterized in that** the legs (4a, b) each comprise a first kink (9a, b), a second kink (10a, b) and a third kink (11a, b), wherein the first kink (9a, b) and the second kink (10a, b) configure the step (5a, b) of in each case one of the legs (4a, b), and wherein the third kink (11a, b) is configured at the transition from the latching portion (7a, b) to the free end (6a, b) of in each case one of the legs (4a, b).

3. Spring bracket (1) according to Claim 2, **characterized in that** a spacing (B) between the second kinks (10a, b) of the legs (4a, b) is smaller than a spacing (C) between the third kinks (11a, b) of the legs (4a, b).

4. Spring bracket (1) according to one of the preceding claims, **characterized in that** the spring bracket (1) comprises at least one, in particular at least two retaining tabs (12a, b) for securing the threaded nut (2) against rotation.

5. Spring bracket (1) according to Claim 4, **characterized in that** the retaining tabs (19, 30) are arranged on each side of the bottom (3) and extend perpendicularly with respect to the bottom (3) in such a way that, with the legs (4a, b), they configure an at least partially closed receptacle (13) for the threaded nut (2).

6. Spring bracket (1) according to either of Claims 4 or 5, **characterized in that** the spring bracket (1) comprising the bottom (3), legs (4a, b) and retaining tabs (12a, b) is configured in one piece.

7. Spring bracket (1) according to one of the preceding claims, **characterized in that** the legs (4a, b) each comprise, in the region of the latching portion (7a, b), a latching groove (14a, b) which is designed to interact with an opening of a clamping element.

8. Spring bracket (1) according to one of Claims 2 to 7, **characterized in that** the first kink (9a, b) defines a first interior angle (β, β'), **in that** the second kink (10a, b) defines a second interior angle (γ, γ'), and **in that** the third kink (11a, b) defines a third interior angle (δ, δ'), wherein the first interior angle (β, β'), the second interior angle (γ, γ') and the third interior angle (δ, δ') are each smaller than 60°.

9. Threaded nut assembly (15) for bracing a clamping clip, comprising a spring bracket (1) according to one of the preceding claims and a threaded nut (2) which can interact with a clamping bolt, wherein the threaded nut (2) can be arranged in the spring bracket (3) such that it is secured against rotation when used as intended.

10. Clamping clip with a clamping bolt which interacts with a polygonal threaded nut (2), wherein the clamping clip comprises a threaded nut assembly (15) according to Claim 9, and wherein the threaded nut (2) is a threaded nut (2) according to Claim 9.

## Revendications

1. Étrier à ressort (1) pour le logement anti-rotation d'un écrou fileté polygonal (2), l'étrier à ressort (1) étant réalisé essentiellement en forme de U et présentant un fond (3) et deux branches (4a, b), chaque branche (4a, b) présentant au moins un gradin (5a, b) et une extrémité libre (6a, b), une section d'encliquetage (7a, b) étant réalisée entre le gradin (5a, b) et l'extrémité libre (6a, b) de chaque branche (4a, b), les extrémités libres (6a, b) des branches (4a, b) étant chacune courbées à l'opposé l'une de l'autre, et les extrémités libres courbées (6a, b) présentant un angle extérieur (α, α') supérieur à 100° par rapport à la section d'encliquetage (7a, b), **caractérisé en ce que** les sections d'encliquetage (7a, b) sont réalisées sous forme inclinée par rapport à un axe central (A) perpendiculaire au fond (3) de telle sorte qu'un passage (8) réalisé entre les sections d'encliquetage (7a, b) se rétrécit en direction du fond (3).

2. Étrier à ressort (1) selon l'une des revendications précédentes, **caractérisé en ce que** les branches (4a, b) comprennent chacune un premier coude (9a, b), un deuxième coude (10a, b) et un troisième coude (11a, b), le premier coude (9a, b) et le deuxième coude (10a, b) réalisant le gradin (5a, b) de chacune des branches (4a, b) et le troisième coude (11a, b) étant réalisé à la transition entre la section d'encliquetage (7a, b) et l'extrémité libre (6a, b) de chacune des branches (4a, b).

3. Étrier à ressort (1) selon la revendication 2, **caractérisé en ce qu'**une distance (B) entre les deuxièmes coudes (10a, b) des branches (4a, b) est inférieure à une distance (C) entre les troisièmes coudes (11a, b) des branches (4a, b).

4. Étrier à ressort (1) selon l'une des revendications précédentes, **caractérisé en ce que** l'étrier à ressort (1) comprend au moins une, notamment au moins deux pattes de retenue (12a, b) pour empêcher la rotation de l'écrou fileté (2).

5. Étrier à ressort (1) selon la revendication 4, **caractérisé en ce que** les pattes de retenue (19, 30) sont agencées chacune d'un côté du fond (3) et s'étendent perpendiculairement au fond (3) de manière à réaliser avec les branches (4a, b) un logement (13) au moins partiellement fermé pour l'écrou fileté (2).

6. Étrier à ressort (1) selon l'une des revendications 4 ou 5, **caractérisé en ce que** l'étrier à ressort (1) est réalisé d'un seul tenant, comprenant le fond (3), les branches (4a, b) et les pattes de retenue (12a, b).

7. Étrier à ressort (1) selon l'une des revendications précédentes, **caractérisé en ce que** les branches (4a, b) comprennent chacune, dans la zone de la section d'encliquetage (7a, b), une rainure d'encliquetage (14a, b) qui est conçue pour coopérer avec une ouverture d'un élément de serrage.

8. Étrier à ressort (1) selon l'une des revendications 2 à 7, **caractérisé en ce que** le premier coude (9a, b) forme un premier angle intérieur (β, β'), **en ce que** le deuxième coude (10a, b) forme un deuxième angle intérieur (γ, γ') et **en ce que** le troisième coude (11a, b) forme un troisième angle intérieur (δ, δ'), le premier angle intérieur (β, β'), le deuxième angle intérieur (γ, γ') et le troisième angle intérieur (δ, δ') étant chacun inférieurs à 60°.

9. Agencement à écrou fileté (15) pour serrer un collier de serrage, comprenant un étrier à ressort (1) selon l'une des revendications précédentes et un écrou fileté (2) pouvant coopérer avec une vis de serrage, l'écrou fileté (2) pouvant être agencé dans l'étrier à ressort (3) de manière à être bloqué en rotation lors d'une utilisation conforme.

10. Collier de serrage avec une vis de serrage qui coopère avec un écrou fileté polygonal (2), le collier de serrage comprenant un agencement à écrou fileté (15) selon la revendication 9 et l'écrou fileté (2) étant un écrou fileté (2) selon la revendication 9.
